# EUROPÄISCHE PATENTANMELDUNG

(11) **EP 1 563 872 A1**
(43) Veröffentlichungstag der Anmeldung: **17.08.2005**
(21) Anmeldenummer: 05450025.1
(22) Anmeldetag: 10.02.2005
(51) Int. Cl.: A62B 37/00, A62C 39/00, G06F 17/40, G07C 1/20, G01C 1/10

(54) **Vorrichtung zur Registrierung und Überwachung von Atemschutzgeräteträgern**

(30) Priorität: 10.02.2004 AT 1882004
(71) Anmelder: Industrieelektronik Pölz, 4551 Ried i. Tr. (AT)
(72) Erfinder: Pölz, Herbert, A-4551 Ried i.Tr (AT)
(74) Vertreter: Jellinek, Gerhard (AT)

(57) **Zusammenfassung**

Die Erfindung betrifft eine neue Vorrichtung zur Registrierung und Überwachung des Einsatzes von Atemschutzgeräteträgern.

Dieselbe ist dadurch gekennzeichnet, dass sie eine Basis-Überwachungsbox (10) mit Eingabeorganen (30; 31 - 34) für die Eingabe der für den jeweiligen Einsatz wesentlichen Parameter und der für die individuelle Überwachung jedes der Atemschutzträger bzw. jedes der Trupps essentiellen Daten umfasst, welche Eingabeorgane mit mindestens einer - eine für jeden der Trupps individuelle, von den Eingabeeinheiten aus in Gang setzbare Zeitmesseinheit (51) umfassenden - Speicherund Steuereinheit (5) datenflussverbunden sind, und dass sie weiters einen, mit der Speicher- und Steuereinheit (5, 50), datenflussverbundenen Bildschirm (2) für die Wiedergabe der eingegebenen Daten und für die gesonderte Anzeige der für jeden Trupp noch verbleibenden Einsatz-Restzeit sowie sonstiger Funktionen der Überwachungsbox (10) und eine von jeder der der Zeitmesseinheiten (51, 51',...) individuell auslösbare Warneinrichtung (4), sowie eine - der Anzahl der zu überwachenden Atemschutzträger entsprechende - Anzahl von zumindest den Namen jedes Atemschutzträgers codiert enthaltenden Transpondern (6, 6', 6", ...) aufweist, wobei eine der Eingabe-Einheiten als Eingabeorgan (300) für die in von jedem der Atemschutzträger bei Einsatzbeginn und bei Einsatzende mit demselben in Ein- bzw. Auslesekontakt zu bringenden Transponder (6, 6', 6", ...) eingeprägten Individualdaten des jeweiligen Atemschutzträgers ausgebildet ist.

## Beschreibung

Die vorliegende Erfindung betrifft eine neue Vorrichtung zur Registrierung und Überwachung des Einsatzes, insbesondere der Dauer des Einsatzes, von Atemschutzgeräteträgern bzw. von mit zwei oder drei dieser Personen gebildeten Trupps, bevorzugt für Feuerwehren, für Zivil- und Umweltschutz-Einsätze u.dgl.

Als Folge einiger schwerer Zwischenfälle beim Einsatz von Trupps mit Atemschutzgeräten in den letzten Jahrzehnten wurde die Notwendigkeit einer prüfenden Registrierung der unter Atemschutz vorgehenden Trupps, z.B. bei Feuerwehreinsätzen, als dringend erkannt. So ist es z.B. bekannt, die Angehörigen eines Trupps mittels Ausfüllens von Formblättern namentlich zu erfassen und ihr Vorgehen z.B. mittels Armbanduhr zeitlich zu fixieren. Es hat sich jedoch gezeigt, dass solche der eigenen Sicherheit zwar dienenden, aber auch wertvolle Zeit verbrauchende Festlegungen häufig nur ungenügend umgesetzt werden und dass sich daher die Trupps bei AtemschutzEinsätzen immer wieder in unnötige Gefahr begeben. Aus diesem Grund wird die Problematik einer einfachen und effektiven Überwachung von Atemschutzgerät-Trägern seit Jahren diskutiert, jedoch ist es schwierig, eine allgemein gültige, schlüssige und vom betroffenen Personal tatsächlich voll akzeptierte Vorgehensweise zu finden. Am weitesten sind auf diesem Gebiet die Vorschriften und Lösungen in Großbritannien gediehen und es existiert insbesondere in Westeuropa eine Vielzahl von einzuhaltenden Vorschriften für die sogenannte Atemschutz-Einsatzführung. Als wesentlich für eine ordnungsgemäße, Unfälle möglichst vermeidende, Atemschutz-Überwachung muss die Forderung angesehen werden, dass die Überwachungsgeräte selbst robust und technisch einfach sowie kostengünstig sein sollen, und auch einfach zu bedienen sein sollen. Bei der Überwachung der Einsatzzeit jedes Trupps bzw. deren Dauer sollen jedwede Mißinterpretationen zulassenden Mehrdeutigkeiten bei der Anzeige der vom Einsatzbeginn an laufenden Einsatzzeit und bei Auslösung von Alarmsignalen vermieden werden.

So ist eine Reihe von Atemschutzeinsatz-Überwachungs-Paneelen bzw. -Boxen bekannt geworden, welche in der Mehrzahl für jeden der Atemschutzgeräte-Träger ein ihm zugeordnetes Namens-Schild vorsehen, welches jeweils in für deren Aufnahme vorgesehene Ausnehmungen eingeschoben werden, nachdem das betreffende Mitglied eines Trupps mit einem Schlüssel, an dem das Namens-Schild hängt, sein Atemschutzgerät aktiviert hat und somit mit seinem Einsatz beginnt. Der Maschinist, also der für die Überwachung vorgesehene Mann, stellt nun, wenn zwei oder drei der für die Namens-Schilder vorgesehenen Einstecknischen besetzt sind, eine Zeituhr für den betreffenden, zwei oder drei Angehörige umfassenden Trupp in Gang und hält dann für jeden Trupp die ihm zugeordnete Zeituhr unter Kontrolle. Die Zeituhr kann z.B. derart ausgerüstet sein, daß die Überwachungs-Box, je nachdem, ob ein Normalzeit-Einsatz, z.B. mit 30 min Gesamtdauer, oder ein Langzeit-Einsatz, z.B. mit typischerweise 60 min Gesamtdauer, stattfindet, beispielsweise nach Ablauf der Hälfte der vorgesehenen Einsatzzeit ein optisches und/oder akustisches Vorwarn-Signal abgibt und daß z.B. nach Beginn des letzten Fünftels oder Sechstels der vorgesehenen Gesamt-Einsatzzeit eine unübersehbare Warnung durch Licht- und Tonsignale erfolgt.

Im Grunde genommen stellen, insbesondere dann, wenn ein rascher und komplexer Einsatz erforderlich ist, die bekannten Überwachungsmechanismen mit Überwachungs-Boxen, mit uhrenartigen Zeitanzeigen relativ hohe Anforderungen an die Aufmerksamkeit und somit eine beträchtliche Belastung für den die Einsätze mehrerer gleichzeitig agierender Trupps überwachenden Mann dar, und es wurde schon lange nach Lösungen gesucht, welche die Überwachungsarbeit in der üblichen Hektik der beschriebenen Einsätze wesentlich vereinfachen, indem eine besonders einfache Art der Eingabe und eine klare Signalgebung erfolgt, wodurch es auch gelingt, die latent vorhandene Gefahr, dass z.B. die Überschreitung der Einsatzzeit eines der Trupps übersehen wird, wesentlich zu vermindern.

Die Entwicklung der Elektronik, Telekommunikations- und Datenverarbeitungstechnik der letzten Jahre hat es erlaubt, neuartige Überwachungsgeräte mit intelligenten Chips im Rahmen einer zentralen Steuereinheit zu schaffen, welche bei ordnungsgemäßem Einschieben aller Karten der Mitglieder eines Atemschutz-Einsatztrupps die Überwachungs-Funktion übernehmen und für eine Zeitanzeige Sorge tragen, die selbst in extremen Stresssituationen vom Überwachungspersonal praktisch nicht übersehen werden können.

Im Hinblick auf diese Situation ist die in der AT 408 282 B und in der DE 200 01 116 U1 geoffenbarte Überwachungseinrichtung geschaffen worden, welche eine Basis-Überwachungsbox mit von jedem der Atemschutzträger ablegbaren und die Einsatz-Überwachung einschaltenden Identifikations-Elementen für die Registrierung und Anzeige jedes der sich im Einsatz befindlichen Atemschutzträger und jedes der jeweils mit zwei oder maximal drei dieser Personen gebildeten Trupps, weiters mit Einsatz-Zeitdauer-Anzeige für jeden der Trupps, sowie mit mindestens einer ab Ablauf eines Teiles der jeweils vorgesehenen Einsatzzeit jedes der Trupps aktivierbaren Warnsignale abgebenden Warn-Einrichtung ausgebildet ist, wobei die Überwachungsbox weiters mindestens eine Speicher- und Steuereinheit für die Steuerung und Regelung zumindest aller wesentlichen Stromversorgungs-, Personen- und Zeitdauer-Überwachungs-, Vorwarn-, Warn- und Alarm-Funktion und mindestens eine netzunabhängige Stromversorgungs-Einrichtung, bevorzugt Batterieblock oder Akkumulator, umfasst. Diese noch mit durch in entsprechende Aufnahme-Nischen einschiebbaren Schilder mit den Individualdaten, insbesondere Namen, der einzelnen Atemschutzträger und mittels des Einschiebens der Schilder betätigbaren Mikroschaltern für die Steuerungselektronik im Inneren der Box und mit Leuchtdioden für eine symbolische Anzeige der Einsatzzeit der Trupps sowie für eine optische Warnung nach Ablauf einer bestimmten Einsatzzeit arbeitende bekannte Überwachungsbox hat sich im praktischen Einsatz an sich ausgezeichnet bewährt.

Im Hinblick auf die bekannt rauen Arbeitsbedingungen im Einsatzfall ist infolge der auf mechanischem Weg stattfindenden Funktionsbetätigung der Box, ein z.B. durch Verschmutzung, Federbruch eines Mikroschalters od.dgl. bedingtes minimales Restrisiko nicht völlig auszuschließen, und im Hinblick auf die im heutigen praktischen Leben üblich gewordenen Usancen im Umgang mit technischen Geräten, wie insbesondere mit eventuelle Fehlbetätigung weitgehend ausschaltender erleichterter Bedienung, wie z.B. mittels berührungslosen Schaltern u.dgl., wurde, wie in der DE 296 20 650 U1 nur global umrissen, versucht, zu Überwachungs-Systemen für zeitbegrenzte Tätigkeiten mit akustischer bzw. optischer Vorwarnung und Alarmmeldung zu gelangen, bei welcher eine Anzeige vorgesehen ist, durch welche alle Parameter visualisiert werden, wobei für die Ein- und Ausgabe der zu Überwachenden ohne jede kritische Auswahl Tastaturen, Touchscreens, Barcodes, Transponder, Chipkarten, Magnetkarten, Lochkarten oder irgendwelche andere Dateneingabe- oder Übertragungssysteme genannt sind.

Die vorliegende Erfindung geht im Prinzip von der bewährten ÜberwachungsEinrichtung gemäß der DE 200 01 116 U1 aus und schlägt unter Einbeziehung ausgewählter, heute zur Verfügung stehender technischer Mittel eine Überwachungs-Vorrichtung vor, welche den heute gestellten Anforderungen im Sicherheits-, Unfall- und Katastrophenbekämpfungs-Bereich und insbesondere einer Vermeidung von Fehleingaben durch besonders einfache Bedienungs-Modi mittels möglichst weniger Tasten im höchsten Ausmaß entspricht.

Gegenstand der Erfindung ist somit eine neue Überwachungs-Vorrichtung der im Oberbegriff des Anspruches 1 beschriebenen Art, welche sich durch die im kennzeichnenden Teil dieses Anspruches geoffenbarten Merkmale auszeichnet.

Es sind also gemäß der Erfindung an die Stelle von Schildern mit den Namen der einzelnen Atemschutzträger als für die Überwachung derselben vorgesehene und während der Zeit des Einsatzes mit der zentralen Überwachungsbox in Funktionskonnex zu bringende bzw. stehende Identifikationselemente die individuellen Transponder jedes der Atemschutzträger bzw. die in denselben gespeicherten und von dort auslesbaren Individualdaten oder dieselben verschlüsselnden Codes getreten. An die Stelle des Einschiebens der Namensschilder in dafür vorgesehene Aufnahme-Nischen der Box und der damit verbundenen Anzeige jedes der sich im Einsatz befindlichen Atemschutzträger an der Box tritt der Ein-/Auslese-Kontakt des Transponders mit dem Einleseorgan der Überwachungsbox und das Erscheinen der zumindest während der gesamten Einsatzzeit jedes der Trupps nicht löschbaren Individualdaten, insbesondere der Namen der Atemschutzträger auf dem Anzeigefeld. Und an die Stelle des mechanischen Schaltens durch das Einschieben des Namensschildes tritt ein berührungsloses bzw. elektronisches Schalten und die Individualdaten-Eingabe mittels der Transponder.

Ein ganz wesentliches Merkmal der Erfindung liegt darin, dass in der neuen Überwachungs- und Alarm-Vorrichtung für jeden der an einem Einsatz beteiligten Trupps und selbstverständlich auch für den für eventuelle Notfälle im Einsatzgeschehen bereit stehenden Bereitschafts-Trupp eine ihm eindeutig zugeordnete Zeitmesseinheit vorgesehen ist, welche jeweils vom zuletzt zum Trupp stoßenden Atemschutzträger, gegebenenfalls schon beim Einlesen mit dem Transponder, unabhängig von den den übrigen Trupps individuell zugeordneten Zeitmesseinheiten, zu laufen beginnt und vor dem Ende bzw. Ablauf der für diesen Trupp spezifisch vorgesehenen bzw. einprogrammierten Einsatzzeit für die Auslösung der Wamsignaleinheit zur Abgabe von Zeitablauf-Warnsignalen vorgesehen ist.

Der Anspruch 2 spezifiziert die für die Eingabe der für die ordnungsgemäßen Funktionen der Überwachungsbox notwendigen allgemeinen Daten sowie der Individualdaten der Atemschutzträger bevorzugterweise vorgesehenen Eingabeelemente.

Dem Anspruch 3 sind Einzelheiten bezüglich der Anzeige der mittels der Eingabeelemente und des Einleseorgans in Kooperation mit den individuellen Transpondern der Atemschutzträger in die Überwachungsbox eingegebenen Daten zu entnehmen, und weiters gibt dieser Anspruch eine vorteilhafte Ausgestaltung des Layouts der Anzeige der Einsatzzeit bzw. insbesondere der jeweiligen Rest-Einsatzzeit wieder.

Hinsichtlich der - im Vergleich zur bisher aus der AT 408.282 B bekannten Anzahl von nur zwei zu überwachenden Atemschutzträger-Trupps pro Überwachungsbox mittels der neuen Überwachungsbox ermöglichten Überwachung einer wesentlich höheren Zahl von sich im Einsatz oder in Bereitschaft befindlichen Trupps gibt der Anspruch 4 näher Auskunft. Ergänzend ist zu diesem Anspruch zu bemerken, dass er eine die Aufmerksamkeit des Einsatzleiters besonders effektiv aufrecht erhaltende Art der Realisierung der Warnsignal-Abgabe offenbart.

Die vom Warnorgan der Box abgebbaren Warn- bzw. Alarmsignale können akustisch auffällige Töne, Tonfolgen, Geräusche od. dgl. sein, aber auch gesprochene, z.B. auf die jeweils noch zur Verfügung stehende Rest-Einsatzzeit hinweisende verbale Warnhinweise.

Wie dem Anspruch 5 zu entnehmen, kann die neue Box bzw. deren als Speicher- und Steuereinheit agierender Mikroprozessor automatisch auf eine jeweils standardisierte "Kurz-Einsatzzeit" von 30 min oder aber - vorzugsweise erst nach einer entsprechenden Abfrage/Bestätigungs-Abfolge - auf eine derart standardisierte LangEinsatzzeit von 60 min eingestellt bzw. programmiert sein.

Dem Anspruch 6 ist ein vorteilhafter Modus der Speicherung der DatenEingabe in der Überwachungsbox und deren Visualisierung auf dem Anzeigefeld zu entnehmen. Hiebei ist in der im Einsatzfall meist auftretenden Stresssituation eine besonders übersichtliche Gestaltung der Anzeige der für eine effektive Überwachung und Kontrolle der essentiellen Daten sowie insbesondere der jeweils für jeden der Trupps individuell zur Verfügung stehenden Einsatz-Restzeit auf dem Anzeigefeld der neuen Überwachungsbox, wie sie gemäß diesem Anspruch vorgesehen ist, besonders günstig.

Der Anspruch 7 offenbart eine im Rahmen der Erfindung angestrebte, besonders klare Form der Darstellung der für jeden Trupp individuellen Einsatz-Restzeit-Anzeige auf dem Anzeigefeld und betrifft weiters vorteilhafte Formen der Handhabung der neuen Überwachungsbox für den Fall ihres Einsatzes für die Überwachung von jeweils zwei oder eben drei Atemschutzträger umfassenden Trupps.

Den Ansprüchen 8 und 9 sind verschiedene, vom Standpunkt der Sicherheit der Mannschaften günstige Arten der Programmierung der Warneinheiten bezüglich der Ausgestaltung bzw. des "Audio-Layouts" der nach Ablauf eines Teils der Einsatzzeit von der Überwachungsbox mittels ihrer Warneinrichtung selbsttätig abgegebenen Sicherheitshinweise und insbesondere Warn- bzw. Alarmsignale zu entnehmen.

Der Anspruch 10 betrifft im Sinne der Handhabungs- und Einsatzbereitschafts-Sicherheit und -Effektivität im Rahmen der Erfindung zu bevorzugende Varianten der Überwachung der internen Funktionen bzw. Funktionsabläufe der neuen Überwachungsbox, sodass immer deren unmittelbare Einsatzbereitschaft gegeben ist.

Der Anspruch 11 betrifft die Sicherung der Energieversorgung und somit die störungsfreie Dauer-Funktionstüchtigkeit und Spontan-Einsatzbereitschaft der neuen Einsatzüberwachungs-Vorrichtung auch für jene längere Zeitintervalle, innerhalb welchen es zu keinen Atemschutzeinsätzen kommt.

Um jederzeit die volle Kontrolle über die Vorgänge während der gesamten Zeit jedes Einsatzes und eine exakte Protokollierung derselben zu gewährleisten, ist eine Ausführungsvariante der neuen Vorrichtung gemäß Anspruch 12 von besonderem Vorteil.

Bei Einhalten der im Anspruch 13 angegebenen, im Prinzip konventionellen und eingeübten Vorgangsweise, bei welcher der Transponder ähnlich wie bisher das Namensschild, und die Überwachungsbox materiell zusammengeführt werden, ist eine Art doppelte Überwachungssicherheit gegeben. Dieser Anspruch betrifft weiters eine sich im praktischen Gebrauch besonders bewährende Ergänzung der neuen Überwachungsbox, durch welche mit den vorhandenen Eingabemöglichkeiten sonst nur umständlich zu erstellende Kurz-Notizen über Beobachtungen und Vorfälle während der Einsatzüberwachung notiert und festgehalten werden können.

Dem Anspruch 14 ist zu entnehmen, dass im Rahmen der Erfindung vorteilhafterweise vorgesehen sein kann, dass mittels gegenseitigem Datenaustausch zwischen Speicher- und Steuereinheit und individuellem Transponder auch dieser Transponder bzw. dessen Speicher mit allen Daten, welche während eines Einsatzes in den Speicher der Box gelangt sind bzw. eingegeben und/oder eingelesen werden bzw. worden sind, versorgt werden kann.

Somit kann der Transponder jedes der Atemschutzträger bei entsprechender Ausrüstung des Umfeldes beispielsweise dazu dienen, den Atemschutzträger im Interesse seiner Sicherheit so lange unter Beobachtung zu halten, bis dieser seinen Schutzanzug abgelegt hat. Dieser mit den relevanten Daten versorgte Transponder kann dazu dienen, die Summe aller Einsatz-Zeiten des Atemschutzträgers innerhalb eines bestimmten gesetzlich vorgeschriebenen Zeitraumes zu speichern, und für den Fall einer Überschreitung der zulässigen Einsatzzeit im genannten Zeitraum, kann ein entsprechendes Kontrollgerät z.B. für eine "Einsatzsperre" aus Gesundheitsgründen für diesen Mann sorgen.

Im Folgenden sollen die wichtigsten der im Rahmen der Erfindung vorgesehenen Funktionen der neuen Atemschutzträger-Überwachungseinrichtung kurz und schlagwortartig zusammengefasst werden:
1.) Üblicherweise sind drei schon in der Überwachungsbox voreinprogrammierte Einsatzzeiten vorgesehen, und jede dieser Zeiten ist frei wählbar, wie z.B. 30 min als Norm-Einsatzzeit für übliche Einsätze, 60 min für Langzeiteinsätze und 15 min für Einsätze bei Chemieunfällen, wobei dafür gesorgt ist, dass bei den beiden letztgenannten Zeiten durch einen Abfragemodus und z.B. durch Doppel-Bestätigung sichergestellt wird, dass von der Norm-Einsatzzeit abweichende Einsatzzeiten gewählt worden sind.
2.) Die Daten der einzelnen Atemschutzträger und der mit diesen gebildeten, jeweils im Einsatz befindlichen Trupps, werden auf dem Bildschirm z.B. in üblicher Druckschrift, z.B. im Zeilenmodus, in ihrem Status angezeigt. So kann bzw. können z.B. die den Trupp betreffenden Zeilen blinkend bzw. flashend aufleuchten, wenn ein sich im Einsatz befindlicher Trupp bereits über die für ihn vorgesehene und einprogrammierte Einsatzdauer hinaus nicht zur Einsatzstelle mit der Überwachungsbox zurückgekehrt ist und somit auch nicht die individuelle Einsatzdauer-Zeitmessung und -Zeitanzeige für diesen Trupp desaktiviert worden ist. Es herrscht somit "Überzeit", die dem Trupp zugeordnete Zeitmesseinheit läuft weiter, und die Zeitanzeige für diesen Trupp wird auf dem Anzeigefeld mit einem Minus-Vorzeichen deutlich visualisiert.
3.) Im Transponder können - im einfachsten Fall - nur Seriennummern und Namen gespeichert sein, welche erst durch die Steuer- und Speichereinheit der Überwachungsbox decodiert werden.
4.) Vorteilhafter Weise werden - um Ausfälle mit besonders hoher Sicherheit zu vermeiden - zwei für die Energieversorgung der Überwachungsbox bestimmte Batteriepakete vorgesehen. Wenn eines davon leer oder nahezu leer ist, sorgt die Software der Steuer- und Speichereinheit dafür, dass die Energieversorgung automatisch auf das zweite Batteriepaket umgeschaltet wird. Wenn also eine der beiden Batterien verbraucht ist, so kann bei jedem Einschalten derselben sofort die Alarmeinheit aktiviert werden und einen Warnton abgeben. Auf dem Anzeigefeld bzw. Display erscheint eine Information bzw. ein Symbol, wie z.B. die Darstellung einer einzelnen Batterie statt deren zwei, welches angibt, dass nur mehr eine Batterie zur Verfügung steht, und auch welche der beiden Batterien. Weiters kann der aktuelle Status der Batterien mittels Menüführung jederzeit abgerufen werden.
5.) Pro Trupp können mindestens zwei, maximal drei Personen eingelesen werden.
6.) Die für die Abgabe von Warn- bzw. Alarmsignalen vorgesehenen, von der Speicher- und Steuereinheit gesteuerten Signal- bzw. Alarmeinheiten sind frei einstellbar: So kann z.B. ein erster Alarm für die Durchführung einer ersten Abfrage des Einsatzleiters an jeden Atemschutzträger, welcher Druck in seiner Luftversorgungsflasche noch vorhanden ist, nach einem Drittel der insgesamt vorgesehenen Einsatzzeit, z.B. nach 20 min, erfolgen.
   Ein zweiter Alarm kann für eine zweite Druck-Abfrage nach Ablauf von zwei Dritteln der vorgesehenen Einsatzzeit, z.B. nach 10 min erfolgen.
   100 % und höchster Alarm würde dann z.B. für diese Flaschen-Druckabfrage gegeben werden, wenn die Einsatzzeit voll ausgeschöpft ist.
7.) Es besteht die Möglichkeit, die Einsatzzeitdauer gleich beim Start oder z. B. nach erfolgter - wie unter 6.) beschriebener - Versorgungstuft-Druckabfrage bei zu niedrigem Druck, z.B. bei nur "halbem" Druck nach einem Drittel der vorgesehenen Einsatzzeitdauer, in der Luftversorgungs-Gasflasche zu korrigieren, also entsprechend herabzusetzen. Es kann weiters auch die jeweilige Truppgröße von zwei auf drei Mann pro Trupp umgestellt werden, wenn eine solche Umstellung tatsächlich erfolgt. Die Alarm- bzw. Wameinrichtungen können - jeweils gesichert z.B. durch Doppelabfrage und Doppelbestätigung - aus- oder eingeschaltet werden. Weiters ist es vorteilhaft, wenn die Software der Box dafür ausgelegt ist, dass alle ursprünglich, später und aktuell eingegebenen Daten - auf dem Anzeigefeld darstellbar - jederzeit abrufbar sind.
8.) In eine Überwachungsbox können die Daten von beispielsweise bis zu 200 Trupps samt allen dazugehörenden Angaben bzw. Daten, wie Einsatzzeiten, Einsatzdatum, namentliche Nennung der Personen, Bereitschaftszeiten, Alarme, Quittierung der Alarme und die jeweilige Echtzeit eingespeichert werden.
9.) Es besteht weiters die Möglichkeit, in der Überwachungsbox die Namen auf die Transponder zu programmieren, den Kontrast der Anzeigen auf dem Anzeigefeld einzustellen und Uhrzeit und Datum sowie alle anderen Angaben zu ändern.
10.) Über eine Schnittstelle RS 232 ist es möglich, die Überwachungsbox mit einem (Personal-)Computer zu verbinden, die Daten aus der Überwachungsbox in denselben zu überspielen und dort abzuspeichern. Es ist aber weiters durchaus möglich, mittels des Computers Parameter in der Box zu ändern oder neue Parameter in dieselbe einzuspielen, sowie weiters die Namen der Atemschutzträger über eine Excel-Liste auf die Transponder zu schreiben und alle Daten als Protokoll auszudrucken.
11.) Die Transponder können während des Einsatzes auf der Schutzhülle bzw. im Deckel der Schutztasche der Überwachungsbox unter- bzw. angebracht oder abgelegt werden. Sie tragen vorteilhafter Weise ein Namensschild, welches der Atemschutzträger bei sich trägt, sodass der selbe bzw. die Angaben über denselben nicht versehentlich gelöscht werden können.
12.) Durch den logischen Aufbau der Anzeigen im Anzeigefeld bzw. Display ist jederzeit und sofort genau zu erkennen, ob sich die Atemschutzträger bzw. die von denselben gebildeten Trupps im Einsatz befinden oder nur in Bereitschaft sind, wie viel Zeit für jeden der Trupps noch zur Verfügung steht, und es ist weiter die Echtzeit, die aktuelle Batteriekapazität und der Name der Box, wie z.B. "Feuerwehr Linz, Box-Nr. 25" gespeichert und dort jederzeit abrufbar visualisierbar.

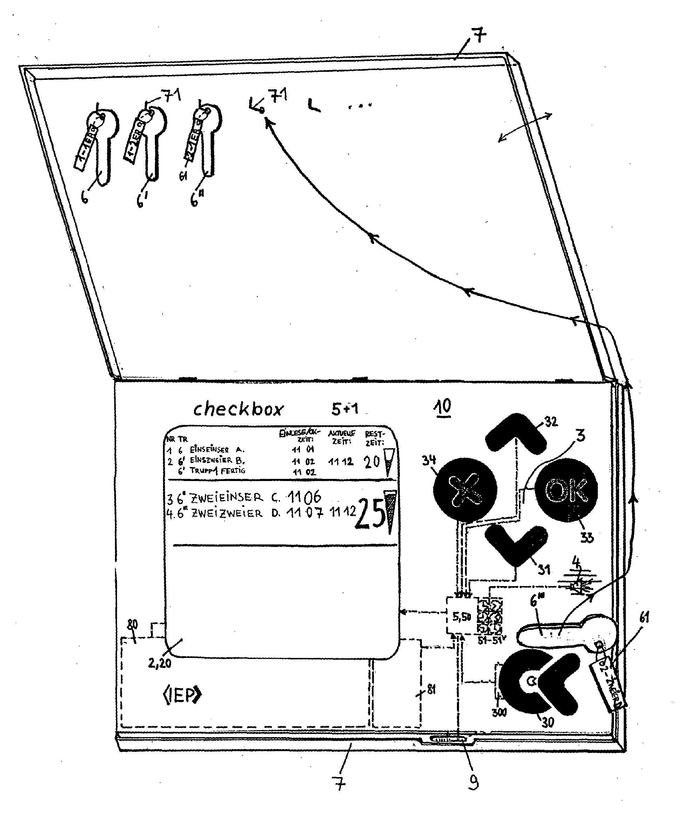

Die Erfindung wird an Hand der einzigen Zeichnungsfigur näher erläutert:
Die dort gezeigte erfindungsgemäße Überwachungsvorrichtung 1 umfasst die Überwachungsbox 10 und eine - der Anzahl der maximal mit dieser Box 10 vom Einsatzleiter bzw. Maschinisten überwachbaren Atemschutzträger entsprechende - Anzahl von - jedem der Atemschutzträger individuell zugeordneten - Transpondern 6, 6', 6", 6"', ... .

Die maximale Anzahl der pro Box überwachbaren Atemschutzträger ist an sich nicht oder höchstens durch die Speicherkapazität der Speicher- und Steuereinheit begrenzt und kann z.B. 18 betragen, was z.B. neun gleichzeitig zu überwachende Atemschutztrupps mit je zwei Atemschutzträgern und andernfalls sechs Atemschutztrupps mit je drei Atemschutzträgern bedeuten kann, wobei es günstig ist, wenn z.B. fünf Atemschutztrupps sich im akut zu überwachenden konkreten Einsatz befinden und ein Atemschutztrupp - ebenfalls mittels der Box 10 überwacht - in Bereitschaft steht, also insgesamt "fünf + eins" Trupps der Überwachung durch den Einsatzleiter mit seiner Box 10 unterworfen sind. In einer neueren Ausführungsversion der Überwachungsbox kann die Zahl der überwachbaren Atemschutzträger durchaus z.B. 200 betragen.

Die in der Zeichnung gezeigte Überwachungsbox 10 ist in einer robusten schützenden, sich dort im geöffneten Zustand befindlichen Hülle, Tasche od.dgl. untergebracht, wobei hier an der Innenseite von deren Deckel gewöhnliche Haken 71 in einer der maximalen Anzahl von zu überwachenden Atemschutzträgern entsprechenden Zahl angeordnet sind. Die Zeichnungsfigur zeigt drei sich schon dort befindliche - von den schon vorher in den Einsatz gegangenen bzw. knapp vor dem konkreten Einsatz stehenden Atemschutzträgern nach deren Einsatz-Bestätigung in die Haken 71 eingehängte, die jeweiligen Individualdaten der Atemschutzträger codiert und in die Überwachungsbox 10 auslesbar gespeichert enthaltende Transponder 6, 6' und 6" befinden. An diese sind z.B. mittels Karabiner bzw. Ring Schilder 61 mit den Namen dieser Atemschutzträger gebunden.

Die Überwachungsbox 10 - ist zumindest frontseitig gegen Staub und Wasser geschützt - mit einer transparenten, flexiblen Folie abgedeckt, welche neben einer Bezeichnung und der Herkunftsangabe innerhalb eines Eingabefeldes 3 mit Symbolen für zwei Curser-Tasten 31, 32 für eine Bestätigungs- bzw. OK-Taste 33 und für eine Lösch- bzw. Negations-Taste 34 oberhalb von jeweils darunter angeordneten, z.B. durch Berührung der oder Druck auf die Symbole betätigbaren Schaltern sowie mit einem Symbol für das Code-Einlesefeld 30 oberhalb des dort z.B. darunter angeordneten Einleseorgans 300, bedruckt ist.

Einen wesentlichen Bereich der Frontfläche der Überwachungsbox 10 nimmt weiters das Anzeigefeld 2, vorzugsweise ein Folienbildschirm 20, ein. Derselbe ist in gleicher Weise wie jeder der Schalter unterhalb der Tastensymbole 31 bis 34 und das Einleseorgan 300 mit der zentralen Speicher- und Steuereinheit 5, bevorzugt Mikroprozessor 50, mit in denselben integrierten, der jeweils maximalen Anzahl der zu überwachenden Trupps entsprechenden Anzahl von trupp-individuell einstellbaren und in Gang setzbaren Zeitmesseinheiten 51, 51', 51"...51^{v}, von welchen hier der Einfachheit halber nur sechs gezeigt sind, datenflussverbunden.

Weiters ist sowohl der Mikroprozessor 50 als auch der Bildschirm 2, 20 mit mindestens einer sich im Inneren der Überwachungsbox 10 befindlichen Stromversorgungseinheit, also Batterie oder Akkumulator 80 mit Pufferspeicher 81 für die Überbrückung der für einen Batteriewechsel benötigten Zeit durchgehend stromversorgbar. Vorzugsweise können zwei derartige Batterien bzw. Akkus vorgesehen sein, wobei für den Fall, dass eine bzw. einer davon aufgebraucht ist, ein entsprechendes Umschaltorgan automatisch für die Umschaltung der Box auf die zweite Stromquelle sorgt.

Das Anzeigefeld 2 bzw. der Bildschirm 20 ist in der Zeichnungsfigur in einem Zustand der schon stattfindenden Überwachung eines sich im Einsatz befindlichen ersten Trupps und eines knapp vor dem Einsatzbeginn stehenden zweiten Trupps gezeigt:

Es haben die Atemschutzträger mit den in den ersten beiden Namenszeilen auf dem Bildschirm aufscheinenden Namen schon vorher nacheinander ihre Transponder 6, 6' auf das mit dem Symbol "C<" gekennzeichneten Einlesefeld 30 gedrückt und durch diese Berührung hat das dort darunter angeordnete Einleseorgan 300 die Individualdaten, also insbesondere die Namen der beiden Atemschutzträger von deren Transpondern 6 und 6' übernommen und an die Speicher- und Steuereinheit 5, 50 übermittelt, wobei dort unmittelbar nach Einlesen des Transponders 6' des zweiten Atemschutzträgers die erste Zeitmesseinheit 51 für den ersten Trupp (Trupp 1) aktiviert wird und zu laufen beginnt. Durch ein Symbol mit 2 Strichfiguren innerhalb einer Haus-Kontur wird angezeigt, dass sich der Trupp 1 im Einsatz befindet.

Die an die Speicher- und Steuerungseinheit 5, 50 übermittelten Individualdaten sowie die Daten der für den Trupp 1 individuellen Zeitmesseinheit 51 werden an das Anzeigefeld 2, 20 weitergegeben und scheinen dort in übersichtlicher Zeilenform auf, ebenso wie die Zeitpunkte, zu denen jeder der beiden Atemschutzträger seinen Transponder 6, 6' mit dem Einleseorgan 300 in Kontakt gebracht hat, sowie weiters der Zeitpunkt, zu dem durch Drücken der OK-Taste 33 die Meldung, dass der erste Trupp 1 in den Einsatz gegangen ist, abgelegt worden ist. Weiters scheint dort die jeweils aktuelle Echtzeit auf, und in z.B. durch erhöhte Schriftgröße möglichst auffälliger Form, die seit dem - den Beginn der Einsatzzeit des ersten Trupps festlegenden - Einlesen des letzten Atemschutzträgers mit seinem Transponder 6' für den Einsatz des Trupps 1 noch zur Verfügung stehenden Einsatz-Restzeit.

Im vorliegenden Fall ist eine Standard-Kurz-Einsatzzeit von 30 min für den Trupp 1 vorgegeben und, da der letzte Atemschutzträger um 11 h 2 min eingelesen hat und somit die vorgesehene Einsatzzeit um 11 h 32 min endet und die Echtzeit gerade 11 h 12 min ist, beträgt die Rest-Einsatzzeit 20 min, was am Bildschirm 20 in großer Schriftgröße auffällig angezeigt ist. Neben dieser digitalen Restzeit-Anzeige ist noch eine symbolische grafische Anzeige, hier in Form eines sich nach abwärts hin verjüngenden Dreieckkeiles vorgesehen, welche die schon vergangene und davon verschieden, vorzugsweise eindrücklich die noch zur Verfügung stehende Zeit anzeigt. Außerdem ist durch das Symbol "2 Mann in einem Haus" deutlich visualisiert, dass der Trupp 1 im Einsatz ist.

Auf dem Anzeigefeld 2, 20 erscheinen weiters, und zwar anfänglich in wesentlich größerer Schrift zur Erleichterung der Kontrolle die Namen von zwei weiteren Atemschutzträgern, von welchen der erste mit der laufenden Nummer 3 schon mittels seines Transponders 6" seine Individualdaten, insbesondere seinen Namen in die Box 10 eingelesen hat und derselbe - in gleicher Weise wie die beiden Atemschutzträger des vorher in den Einsatz gegangenen Trupps 1 schon vorher ihre Transponder 6, 6' mit jeweiligen Namensschildern 61 in die Aufbewahrungs-Haken 71 in der Schutzhülle 7 für die Überwachungsbox 10 eingehängt haben - seinen Transponder 6" dort einhängt. Der "letzte" Atemschutzträger des Trupps 2 mit der laufenden Nummer 4 hat um 11 h 7 min mit Hilfe seines Transponders 6''' seine Individualdaten eingelesen, die am Bildschirm 20 angezeigt sind und hat - in der Zeichnungsfigur symbolisch durch einen Bewegungspfeil angedeutet - seinen Transponder 6''' vom Einlesefeld 30 weg zu bewegt und in den vierten Haken 71 der Hülle 7 der Überwachungsbox 10 zur Aufbewahrung für die Zeit des Einsatzes seines Trupps 2 eingehängt.

Zur Echtzeit 11 h 12 min sind von den insgesamt ab der Einlesezeit dieses letzteren Atemschutzträgers des Trupps 2 um 11 h 07 min laufenden, als Standard-Kurz-Einsatzzeit zur Verfügung stehenden 30 min z.B. 5 min vergangen und es scheint somit dort in auffälliger Schriftgröße die Einsatz-Restzeit von 25 min auf.

Nachdem der zweite Atemschutzträger des zweiten Trupps mit Hilfe seines Transponders 6"' eingelesen hat, scheint am Bildschirm 20 - in der Fig. nicht gezeigt - weiters eine Frage "Trupp 2 fertig?" auf, und nach Betätigen der OK-Taste 33 werden die Angaben zu Trupp 2 in Normalschriftgröße zurückgeführt visualisiert und nach den Angabezeilen zu Trupp 1 in der für denselben verwendeten Schriftgröße gereiht.

Die beschriebenen Vorgänge wiederholen sich jedes Mal beim Einsatz weiterer Trupps in analoger Weise.

Ist nun für den Trupp 1 z.B. ein Drittel der vorgegebenen - an sich aber auch variabel und gezielt einstellbaren - Einsatzzeit erreicht, so wird - vom Mikroprozessor 50 aktiviert - die Warneinrichtung 4 in Betrieb gesetzt und gibt z.B. einen Dauer-Alarmton ab, welcher von der für die Überwachung zuständigen Person zu quittieren bzw. zu bestätigen ist, wonach dieser Alarmton jeweils aufhört. Der Alarmton kann begleitet sein vom Aufleuchten eines Wamlichtes und/oder von einem Flashen jener Zeilen am Display, die den sich schon so lange im Einsatz befindlichen Trupp betreffen.

Sind weiters dann zwei Drittel der vorgegebenen Einsatzzeit erreicht, kann beispielsweise ein Dauer-Wamton höherer Intensität abgegeben werden, der ebenfalls nur dadurch abgestellt werden kann, dass er vom Überwachungs-Beauftragten bestätigt wird. Es kann, wie schon beschrieben, zusätzlich ein intensiveres, höher-frequentes Flashen der Zeilen des jeweiligen Trupps am Display erfolgen.

Ab dem Zeitpunkt des Endes bzw. Ablaufs der jeweiligen Einsatzzeit wird dann von der Warneinheit z.B. alle 5 min ein in seiner Intensität noch weiter erhöhtes Dauer-Warnsignal abgesetzt, das jedes Mal beispielsweise nur durch "doppelte Bestätigung" zum "Schweigen" zu bringen ist. Gleichzeitig werden alle wesentlichen Daten der Vorgänge innerhalb der "Überzeit" nach Ablauf der vorgegebenen Einsatzzeit in der zentralen Speicher- und Steuereinheit gespeichert, und sind dann zusammen mit allen Daten aus der regulären Einsatzzeit abrufbar.

Sind, wie im Normalfall üblich, die Atemschutzträger des ersten Trupps rechtzeitig, d.h. also vor oder jedenfalls zu Ende einer Einsatzzeit von 30 min, zur Einsatzstelle, also zum Überwachungs-Beauftragten zurückgekehrt, so nimmt derselbe die persönlichen Transponder 6, 6' der Atemschutzträger von den Aufbewahrungshaken 71, sorgt für das Auslesen der im Transponder codiert gespeicherten Individualdaten durch Kontakt mit dem Einlesefeld 30 bzw. dem Einleseorgan 300 der Überwachungsbox 10 und übergibt jeden der Transponder 6, 6' persönlich an den jeweiligen Atemschutzträger. Dieser nimmt den Transponder an sich und befestigt ihn beispielsweise an seiner Atemschutz-Uniform, sodass dieser beim nächsten Einsatz wieder unmittelbar bereitgestellt ist.

Ist z.B. von einem Trupp die vorgesehene Einsatzzeit nicht voll ausgenützt worden, weil z.B. das Einsatzziel rascher als erwartet erreicht worden ist, so besteht ein Einsatzzeit-Restguthaben, welches selbstverständlich nach Rückkehr zur Box 10 durch Kontakt zwischen Transponder 6, 6' und Einlesefeld 30 von der Speicher- und Steuereinheit registriert und dort gespeichert wird. Bevorzugterweise kann dieses Einsatzzeit-Guthaben auch in den Transponder 6, 6' der Atemschutzträger dieses früher als vorgesehen zurückgekehrten Trupps "überspielt" und auch dort gespeichert werden. Bestehen solche Restguthaben, so können diese Atemschutzträger im Rahmen eines Einsatzgeschehens jedenfalls für diese Restzeit noch einem für einen entsprechenden Kurzzeit-Einsatz herangezogen werden.

Die neue Überwachungsbox ist selbstverständlich auch dafür geeignet, nicht nur direkt in den Einsatz gehende oder eben im Einsatz stehende Trupps zu überwachen, sondern auch für die Überwachung von Trupps Sorge zu tragen, welche bloß in EinsatzBereitschaft stehen, womöglich an einem vom Überwachungs-Beauftragten weiter entfernten Ort, z.B. im Bereich eines Hintereingangs eines Gebäudes. Dieser Trupp kann z.B. als "leeres Haus" mit außerhalb desselben dargestellten 2 Figuren symbolisiert auf dem Bildschirm aufscheinen.

Auch für einen solchen, sich in Bereitschaft haltenden, Trupp, erfolgt das "Einlesen" mittels der Transponder jedes Atemschutzträgers und während der und nach Ablauf der jeweils vorgesehenen in die Speicher- und Steuereinheit eingegebenen Bereitschaftszeit sorgt, z.B. im Abstand von jeweils 5 min eine entsprechende, auf dem Anzeigefeld-Screen erscheinende, gegebenenfalls von einem Signalton begleitete, Warnanzeige dafür, dass der Überwachungsbeauftragte mit einem Mitglied des Trupps, z.B. Funkkontakt, aufnimmt und die zu diesem Zeitpunkt dort gegebene Situation abfrägt. Ist es z.B. aus Gründen der entsprechenden Gegebenheiten zwischenzeitlich notwendig geworden, dass der in Bereitschaft stehende Trupp in den Einsatz gehen musste, so können z.B. höchstens 5 min bis zur nächsten Abfrage an diesen Trupp vergangen sein und dann kann der Überwachende durch entsprechende Eingabe dafür sorgen, dass die Überwachungsbox 10 für diesen Trupp in den Einsatzmodus geschaltet wird und dann in gleicher Weise mit individueller, trupp-spezifischer Zeitmessung arbeitet, wie bei einem schon von vornherein in den Einsatz gehenden Trupp. Das gerade vorher beschriebene, die Bereitschaft des Bereitschaftstrupps angebende Symbol "leeres Haus, Atemschutzträger außerhalb desselben wird dann automatisch auf das Symbol "Einsatz: Figuren im Haus" umgeschaltet.

In der Zeichnungsfigur ist - von der Speicher- und Steuerungseinheit 5, 50 ausgehend - noch eine Übertragungsleitung zu einer symbolisch angedeuteten Schnittstelle 9 angedeutet, über welche alle in der Speicher- und Steuereinrichtung 5, 50 der Überwachungsbox 10 gespeicherten Daten jedes der am jeweiligen Einsatz beteiligten Atemschutzträger und deren Trupps und alle sonstigen Eingaben und Vorgänge während der Einsatzzeit jedes der Trupps in einen externen Computer, an ein externes ProtokollierSystem od. dgl. überspielt werden kann, sodass alle sich auf den jeweiligen Einsatz beziehenden Informationen jederzeit abrufbar sind.

## Patentansprüche

1. Vorrichtung zur Registrierung und Überwachung des Einsatzes der Dauer des Einsatzes von Atemschutzgeräte-Trägern bzw. von einem oder mehreren, mit zwei oder drei derselben gebildeten Trupp(s) für Feuerwehr-, Zivil- und Umweltschutz-Einsätze u.dgl., mit einer Basis-Überwachungsbox bzw. einem derartigen Paneel mit dort von jedem der Atemschutzträger ablegbaren und die Einsatzzeit-Überwachung einschaltenden Identifikations-Elementen für die Registrierung und Anzeige jedes der sich im Einsatz befindlichen Atemschutzträger und jedes der jeweils mit zwei oder maximal drei dieser Personen gebildeten Trupps, mit Einsatzzeitdauer-Anzeigeeinrichtung sowie mindestens einer ab Ablauf eines Teiles der jeweils vorgesehenen Einsatzzeit aktivierbaren, Warnsignale abgebenden Warn-Einrichtung, wobei die Überwachungsbox weiters mindestens eine Speicher- und Steuereinheit für die Steuerung und Regelung zumindest aller wesentlichen Stromversorgungs-, Personen- und Zeitdauer-Überwachungs-, Vorwarn-, Warn- und Alarm-Einheiten und mindestens einen Batterieblock oder Akkumulator als netzunabhängige Stromversorg-Einrichtung umfasst,
**dadurch gekennzeichnet, dass** die Vorrichtung (1)
- eine Basis-Überwachungsbox (10) mit,
- auf deren Anzeige- und Bedienungsfrontseite (100) in einem Bedienungsfeld (3) angeordneten Eingabeorganen (30; 31 bis 34) für die Eingabe der für den jeweiligen Einsatz wesentlichen Parameter und Daten und besonders der für die individuelle Überwachung jedes der Atemschutzträger bzw. jedes der mit den Atemschutzträgern gebildeten Trupps essentiellen Daten, nämlich zumindest der jeweils vorgesehenen Maximal-Einsatzdauer des Trupps und der Individualdaten der einzelnen Atemschutzträger jedes der Trupps, welche Eingabeeinheiten (30; 31 bis 34) mit mindestens einer - eine für jeden der Trupps individuelle, von einer der genannten Eingabeeinheiten aus in Gang setzbaren Zeitmesseinheit (51, 51', 51", ... 51^{v}) umfassenden - Speicher- und Steuereinheit (5), insbesondere Mikroprozessor (50), im Inneren der Box (10) datenflussverbunden sind,
- weiters mit mindestens einem dort ebenfalls angeordneten, mit der Speicher- und Steuereinheit (5, 50), datenflussverbundenen Bildschirm-Anzeigefeld (2) bzw. Display für die Wiedergabe bzw. Anzeige der jeweils einzugebenden bzw. eingegebenen Daten und für die trupp-spezifisch gesonderte Anzeige der für jeden der im Einsatz stehenden Trupps jeweils noch zur Verfügung stehenden Einsatz-Restzeit sowie der sonstigen Funktionen der Komponenten der Überwachungsbox (10) und
- mit mindestens einer von jeder der für jeden der Trupps vorgesehenen individuellen Zeitmesseinheiten (51, 51', 51", ... 51^{v}) der Speicher- und Steuereinheit (5, 50) individuell ansteuer- und auslösbaren akustischen und/oder optischen Warneinrichtung (4), bzw. Warnanzeige auf dem Anzeigefeld (2)
- sowie eine - der Anzahl der mit der Überwachungsbox (10) insgesamt überwachbaren Atemschutzträger entsprechende - Anzahl von jeweils die Individualdaten, wie zumindest den Namen jedes der Atemschutzträger codiert enthaltenden - die eingangs genannten Identifikationselemente bildenden bzw. beinhaltenden - Transpondern (6, 6', 6", ...) umfasst, und
- dass eine der genannten Eingabe-Einheiten (30; 31 bis 34) Menüführungs-, Notstop-Eingabebeinheiten, des Einlesefelds (3) od. dgl. der Basis-Überwachungsbox (10) als Eingabe- bzw. Einleseorgan (300) für die dem von jedem einzelnen der Atemschutzträger bei Einsatzbeginn und bei Einsatzende mit demselben über das Einlesefeld (30) in Ein- bzw. Auslese-Kontakt zu bringenden Transponder (6, 6', 6", ...) eingeprägten Individualdaten des jeweiligen Atemschutzträgers ausgebildet ist.

2. Vorrichtung nach Anspruch 1, **dadurch gekennzeichnet, dass** das Bedienungsfeld (3) der Überwachungsbox (10), jeweils durch entsprechende Symbole **gekennzeichnet**, zumindest je eine Curser-Taste (31, 32) od. dgl. für menügeführtes, Vorwärts- und Rückwärts-Schalten der Anzeigen auf dem Anzeigefeld (2, 20), eine Bestätigungs- bzw. OK-Taste (33) und eine Lösch- bzw. Negationstaste (34) sowie ein für den Datenaustausch-Kontakt mit den Transpondern (6, 6', 6", ...) jedes der Atemschutzträger vorgesehenes, mit einem entsprechenden Symbol **gekennzeichnetes** Einlesefeld (30) umfasst, oder aber das Einlesefeld (3) der Überwachungsbox (10) mit den Eingabeeinheiten (30; 31 bis 34) als Touchscreen-Bereich des Anzeigefeldes (2), insbesondere LCD- oder Plasma-Bildschirms (20), mit den entsprechenden dort wiedergegebenen Symbolen der genannten Eingabeeinheiten ausgebildet ist.

3. Vorrichtung nach Anspruch 1 oder 2, **dadurch gekennzeichnet, dass** das Anzeigefeld (2, 20) für eine, bevorzugterweise zeilenweise, Anzeige bzw. Wiedergabe der jeweils mittels ihres Individual-Transponders (6, 6', 6", ...) über das Einlesefeld (30) in das Einleseorgan (300) eingelesenen Namen und sonstigen Individualdaten der zwei oder maximal drei, jeweils einen Trupp bildenden Atemschutzträger und für die Anzeige bzw. Wiedergabe einer diesem Trupp zugeordneten - vom Zeitpunkt des Einlesens der Individualdaten vom Transponder (6) des jeweils letzten, also zweiten oder dritten Atemschutzträgers jedes der Trupps für diesen Trupp an - gesondert aktivierten Zeitmesseinheit und deren Zeitanzeige am Anzeigefeld (2, 20) ausgebildet ist, wobei vorgesehen ist, dass die von jeder der einem der Trupp zugeordneten Zeitmesseinheiten (51, 51', 51", ... 51^{v}) ausgehende, im Anzeigefeld (2, 20) aufscheinende Zeitanzeige für jeden der Trupps eine, durch eine Echtzeit-Anzeige ergänzte, Einsatz-Restzeitanzeige für die Angabe der jedem der Trupps jeweils noch zur Verfügung stehenden Einsatz-Restzeit umfasst.

4. Vorrichtung nach einem der Ansprüche 1 bis 3, **dadurch gekennzeichnet, dass** die Überwachungsbox (10) bzw. deren Speicher- und Steuereinheit (5, 50), für die simultane Überwachung und Anzeige der Individualdaten, insbesondere Namen, der Atemschutzträger von einer jeweils frei wählbaren Anzahl von Trupps und von der jeweils individuellen Einsatz- bzw. Rest-Einsatzzeit jedes der Trupps und zur Auslösung und Abgabe von - der sich laufend verringernden jeweiligen Rest-Einsatzzeit entsprechend, stufenweise steigernd intensivierten - Warnsignalen durch die Warneinrichtung (4) ausgebildet ist.

5. Vorrichtung nach einem der Ansprüche 1 bis 4, **dadurch gekennzeichnet,**
- **dass** bei der Aktivierung derselben nach erfolgtem Eingeben bzw. Einlesen der Daten des jeweils letzten, also zweiten oder dritten Atemschutzträgers jedes der Trupps mittels dessen Transponder (6', 6''') die dem jeweiligen Trupp individuell zugeordnete Zeitmesseinheit (51, 51', 51", ... 51^{v}) der Speicher- und Steuereinheit (5, 50) sich automatisch auf eine Standard-Einsatzzeit von 30 min einstellend ausgebildet ist, und
- **dass** eine andere und insbesondere längere Einsatzzeitdauer, wie beispielsweise eine "Standard-Langeinsatzzeit" von 60 min erst durch Betätigung der Menüführung mittels der Cursortaste (31) auf dem Anzeigefeld (2, 20) visualisierbar und erst durch zweimalige Bestätigung mittels der Bestätigungs- bzw. OK-Taste (33) einstellbar ist.

6. Vorrichtung nach einem der Ansprüche 1 bis 5, **dadurch gekennzeichnet, dass** die Überwachungsbox (10) mittels des im Einsatz- oder aber Bereitschaftsfall vom ersten der in den Einsatz oder in die Bereitschaft gehenden Atemschutzträger mittels dem Einleseorgan (300) über das Einlesefeld (30) durch Auflegen bzw. Aufdrücken in Kontakt gebrachten Transponders (6) einschaltbar bzw. aktivierbar ist, wobei im Wesentlichen simultan die Speicherung der Individualdaten dieses ersten Atemschutzträgers in der Speicher- und Steuereinheit (5, 50) und deren Anzeige auf dem Anzeigefeld (2, 20) erfolgt, wonach in gleicher Weise der zweite und - wenn vorgesehen - der dritte Atemschutzträger eines Trupps registrier- und auf dem Anzeigefeld (2, 20) anzeigbar ist, wobei bis zum Abschluss der Registrierung des jeweils letzten, also des zweiten oder maximal dritten, Atemschutzträgers eines - dann "fertigen" bzw. "kompletten", also einsatzfertigen - Trupps in der Überwachungsbox (10) eine, vorzugsweise im üblichen Zeilenmodus vorliegende, Wiedergabe, der Individualdaten, insbesondere der Namen, der Atemschutzträger im Anzeigefeld (2, 20) zur leichteren Kontrolle in Großformat erfolgt, und dass diese, vorzugsweise erst nach Bestätigung mittels OK-Taste (33), in den normalformatigen Zeilenmodus zurückführbar sind.

7. Vorrichtung nach einem der Ansprüche 1 bis 6, **dadurch gekennzeichnet,**
- **dass** nach erfolgter Eingabe der Individualdaten durch Datentausch-Kontakt zwischen dem Transponder (6', 6") des jeweils letzten Atemschutzträgers eines jeden der Trupps und dem Einleseorgan (300) der Überwachungsbox die - diesem Trupp individuell zugeordnete Zeitmesseinheit (51, 51', 51", ... 51^{v}) in der Speicher- und Steuereinheit (5, 50) und mit ihr die Einsatz-Restzeit-Anzeige für diesen Trupp aktivierbar ist und auf dem Anzeigefeld (2, 20) aufscheint und im sich automatisch einstellenden oder jeweils gewählten Zeitintervall-, vorzugsweise im Sekunden-Takt, abwärts zu laufen beginnt, und/oder
- **dass** nach Eingabe der Individualdaten durch Datentausch-Kontakt zwischen dem Transponder (6') eines einem ersten Atemschutzträger zeitlich nachfolgenden zweiten Atemschutzträgers und dem Einleseorgan (300) auf dem Anzeigefeld (2, 20) eine Abfrage erscheint, ob damit ein "fertiger" Trupp gebildet ist, was bejahendenfalls mittels Bestätigungs- bzw. OK-Taste (33) bestätigbar ist und die damit gegebene Vollständigkeit des Trupps als Meldung vom Anzeigefeld ablesbar ist, bzw.
- **dass** - für den Fall des Einsatzes eines drei Atemschutzträger umfassenden Trupps - nach Eingabe der Individualdaten von zwei Atemschutzträgern mittels deren Transpondern (6, 6') und der daraufhin auf dem Anzeigefeld (2, 20) aufscheinenden Abfrage, ob damit ein "fertiger" Trupp gebildet ist, vorzugsweise mittels OK-Taste (33), das Einlesorgan (300) für das Einlesen der Individualdaten vom Transponder (6") des dritten Atemschutzträgers aktivierbar ist, wonach nach erfolgtem Einlesen der Individualdaten derselben von dessen Transponder (6") auf dem Anzeigefeld (2, 20) die Abfrage nach der Komplettheit des insgesamt drei Atemschutzträger umfassenden Trupps erscheint, welche durch Betätigung der Bestätigungstaste (33) bestätigbar ist.

8. Vorrichtung nach einem der Ansprüche 1 bis 7, **dadurch gekennzeichnet, dass** - durch die Speicher- und Steuereinheit (5, 50), gesteuert - mittels der individuell für jeden der im Einsatz stehenden Trupps vorgesehenen trupp-spezifischen Zeitmesseinheit nach Ablauf eines jeweils individuell eingegebenen, vorzugsweise eines vorgegebenen bzw. vor-einprogrammierten Teiles, bevorzugt nach Ablauf der Hälfte oder eines Drittels, der für diesen Trupp vorgesehenen und eingespeicherten Einsatzzeit die Warneinrichtung (4) aktivierbar und von derselben ein erstes akustisches und vorzugsweise zusätzlich ein optisches (Vor-)Warnsignal bzw. eine erste (Vor-)Warnsignalfolge abgebbar bzw. eine optisch auffallende Warnanzeige im Anzeigefeld (2, 20) wiedergebbar ist.

9. Vorrichtung nach einem der Ansprüche 1 bis 7, **dadurch gekennzeichnet, dass** - durch die Speicher- und Steuereinheit (5, 50) gesteuert - individuell für jeden der im Einsatz stehenden Trupps nach Abgabe des ersten (Vor-)Wamsignals aus der Warneinrichtung (4) in jeweils individuell einstellbaren oder aber vorgegebenen bzw. einprogrammierten Intervallen Warnsignale mit sich mit Verringerung der jeweiligen Einsatz-Restzeit steigernder Intensität und/oder Zeitdauer abgebbar sind, wobei es bevorzugt ist, wenn zumindest im letzten Intervall der jeweiligen Einsatz-Restzeit jedes der Trupps Warnsignale mit maximaler Intensität kontinuierlich über dieses gesamte Restzeit-Intervall, gegebenenfalls in Form eines eventuell auf- und abschwellenden Dauer-Warnsignaltons abgebbar sind.

10. Vorrichtung nach einem der Ansprüche 1 bis 9, **dadurch gekennzeichnet, dass** bei Rückkehr jedes der Trupps von seinem Einsatz mittels des von jedem der Atemschutzträger dieses Trupps mit dem Einleseorgan (300) der Überwachungsbox (10) in Datentausch-Kontakt gebrachten Transponders (6, 6', 6", ...) die jeweiligen Individualdaten desselben deaktivierbar sind, und zwar so lange, bis der zweite oder aber der dritte vom Einsatz zurückgekehrte Atemschutzträger dieses zwei oder aber drei Atemschutzträger umfassenden Trupps seinen Transponder (6' oder 6") mit dem Einleseorgan (300) in Datentausch-Kontakt gebracht hat, wonach eventuell erst nach Ablauf einer Prüfzeit, von beispielsweise 0 bis 2 min, eine Final-Deaktivierung für diesen Trupp unter Verschwinden von dessen Anzeige vom Anzeigefeld (2, 20) der Überwachungsbox (10) erfolgt, wobei jedoch Echtzeit, Einsatzzeit, Einsatz-Restzeit und die sonstigen Daten jeder der am Einsatz beteiligten Personen dieses Trupps im Speicher der Speicher- und Steuereinheit (5, 50) abgelegt und von dort bei Bedarf abrufbar gespeichert bleiben bzw. dass nach Rückkehr aller Trupps aus ihren Einsätzen nach Kontakt des Transponders (6' oder 6"') des letzten der vom Einsatz zurückgekehrten Atemschutzträgers des zuletzt von seinem Einsatz zurückgekehrten Trupps, gegebenenfalls nach Ablauf einer Prüfzeit, von beispielsweise bis zu 2 min, eine Final- Deaktivierung der Überwachungsbox (10) durch, bevorzugterweise selbsttätiges, Abschalten derselben erfolgt.

11. Vorrichtung nach einem der Ansprüche 1 bis 10, **dadurch gekennzeichnet,**
- **dass** die Überwachungsbox (10) ein von der Speicher- und Steuereinheit (5, 50) laufend überwachtes Messorgan für die von deren Stromversorgungsquelle, insbesondere Batterie bzw. dem Akkumulator (80), jeweils aktuell gelieferte Spannung aufweist, mittels welchem Spannungs-Messorgan bei Absinken der Stromversorgungs-Spannung unter einen vorgegebenen Wert - ebenfalls durch die Speicher- und Steuereinheit (5, 50), insbesondere Mikroprozessor, gesteuert -
- eine, gegebenenfalls von einem von der Warneinrichtung (4) abgebbares charakteristischen Warnsignal begleitete Stromversorgungs-Warnanzeige auf dem Anzeigefeld (2, 20), vorzugsweise zumindest 1 Stunde, vor einer endgültigen Erschöpfung der Stromversorgungsquelle aktivierbar ist oder aber
- für den Fall, dass die Überwachungsbox (10) mit zwei Stromversorgungsquellen ausgestattet ist, von der Speicher- und Steuereinheit (5, 50) aus ein Schalter zum Umschalten auf die noch nicht erschöpfte zweite Stromversorgungsquelle betätigbar ist, oder
- **dass** die Stromversorgungsquelle (80) einen mittels der Strom- und Spannungsversorgungsquelle (80) laufend im voll geladenen Zustand gehaltener bzw. nach erfolgter (Teil-)Entladung, von der Speicher- und Steuereinheit (5, 50) gesteuert, wieder vollaufladbarer Pufferspeicher (81), bevorzugt (Elektrolyt-)Kondensator, und ein Schaltorgan umfasst, mittels welchem innerhalb der Zeitdauer, die zum Austausch einer bzw. eines erschöpften Batterie bzw. Akkumulators (80) gegen einen neuen bzw. einen frisch geladene(n) benötigt wird, bevorzugt für etwa 1 min, das gesamte Betriebssystems der Überwachungsbox (10), und insbesondere von deren Speicher- und Steuereinheit (5, 50), aufrecht erhaltbar ist.

12. Vorrichtung nach einem der Ansprüche 1 bis 11, **dadurch gekennzeichnet, dass** in der Speicher- und Steuereinheit (5, 50) der Überwachungsbox (10) alle im Zuge eines Einsatzes von Atemschutzträgern in dieselbe eingegebenen Daten und während der Einsatzzeit der Trupps sonst erfolgten Aktivitäten, Vorgänge und Prozesse speicherbar und über eine Schnittstelle an einen externen Computer, an ein externes Speichermedium, Protokolliersystem od. dgl. abgebbar sind.

13. Vorrichtung nach einem der Ansprüche 1 bis 12, **dadurch gekennzeichnet, dass** die Überwachungsbox (10) selbst bzw. eine für deren Schutz und Transport vorgesehene Hülle, Tasche (7) od. dgl. mit einer der mit der genannten Box (10) überwachbaren maximalen Anzahl von Atemschutzträgern entsprechenden Anzahl von Aufbewahrungs- bzw. Befestigungselementen, bevorzugt Haken (71), für die Aufnahme und Aufbewahrung der von jedem der Atemschutzträger nach erfolgtem Einlese-Kontakt mit dem Einlesorgan (300) der Überwachungsbox (10) abzugebenden, dort zu deponierenden, insbesondere in einen der Haken (71) einzuhängenden, und nach Rückkehr aus dem Einsatz von dort wieder zu entnehmenden und nach erfolgtem Auslese-Kontakt zwischen Transponder (6, 6', 6", ...) und Einleseorgan (300) von vom Atemschutzträger an sich zu nehmenden bzw. an seinem Schutzanzug zu befestigenden Transpondern (6, 6', 6", ...) ausgestattet ist und/oder
- dass die Überwachungsbox (10) Klammern, Klemmen od. dgl. Befestigungselemente für die Anordnung einer, bevorzugt mit Folienschreiber od. dgl. beschreibbaren und eventuell auch schrift-löschbaren, Klarsicht- bzw. Overheadfolie, auf deren Sichtseite aufweist, oder
- dass dort eine selbstklebende und nach Gebrauch abziehbare Klarsichtfolie (125) für Notizen aufbringbar ist, oder,
- dass die Überwachungsbox (10) zusätzlich ein Eingabefeld für elektronische Handnotizen nach Art eines "personal digital assistant" aufweist.

14. Vorrichtung nach einem der Ansprüche 1 bis 13, **dadurch gekennzeichnet, dass** alle Eingaben und Daten, welche im Rahmen des Einsatzes jedes der Atemschutzträger-Trupps in der Steuer- und Speichereinheit (5, 50) der Überwachungsbox gespeichert sind und dort, bevorzugt permanent, gespeichert bleiben, beim "Auslesen" der Transponder (6, 6', 6", ...) bei Übergabe derselben an die Atemschutzträger jedes der Trupps nach beendetem Einsatz bzw. nach Ende einer Bereitschaft in den Speicher des Transponder "überspielbar" sind, sodass bei entsprechender Ausstattung der Räumlichkeiten für die Trupps mittels dort angeordneter, zum Datenaustausch mit dem Transponder vorgesehener Prozessoren, beispielsweise das sichere Eintreffen jedes Atemschutzträgers nach Ende seines Einsatzes und Übernahme seines Transponder (6, 6', 6", ...) und/oder die für dessen Gesundheit relevanten Daten kontrollierbar ist bzw. sind.
